# EUROPEAN PATENT APPLICATION

(11) **EP 3 410 256 A1**
(43) Date of publication of application: **05.12.2018**
(21) Application number: 17173868.5
(22) Date of filing: 01.06.2017
(51) Int. Cl.: G06F 3/01, G06F 17/50, G06T 19/00

(54) **METHOD FOR OUTPUTTING OF COMBINED 2D AND 3D IMAGING**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(57) **Abstract**

The present invention refers to a method for outputting of combined 2D and 3D imaging. This method preferably comprises at least the steps:
Providing a display means (104) for at least outputting of data of a first type as 2D imaging,
Providing a head mounted display (102) with see through ability,
Aligning the head mounted display (102) to bring the display means (104) into the field of view of the head mounted display (102),
Registering the display means (104) and the head mounted display (102) as combined display unit,
Outputting by means of the head mounted display (102) data of a second type as optical information representing at least one 3D object (103),
wherein the 3D object (103) is positioned within the field of view in dependency of the position of the 2D imaging displayed by the display means (104).

## Description

The present invention refers according to claim 1 to a method for outputting of combined 2D and 3D imaging and according to claim 13 to a computer program product.

### Background of the invention

Document US20150235423 discloses an augmented reality system including an unmanned moving object and an augmented reality marker arranged on or within the unmanned moving object. The augmented reality system further includes a visual rendering unit that is configured to augment virtual information corresponding to the augmented reality marker and to map the virtual information on the unmanned moving object.

The prior art does not enable advanced 2D and 3D imaging.

### Object of the invention

It is the object of the present invention to provide a method and computer program product that provides an alternative to the state of the art.

### Description of the Invention

The before mentioned object is solved by a method according to claim 1 for outputting of combined 2D and 3D imaging. The method according to the invention preferably comprises at least the steps: Providing a display means for at least outputting of data of a first type as 2D imaging, providing a head mounted display with see through ability, aligning the head mounted display to bring the display means into the field of view of the head mounted display, registering the display means and the head mounted display as combined display unit, outputting by means of the head mounted display data of a second type as optical information representing at least one virtual object, in particular 3D object, wherein the virtual object is positioned within the field of view in dependency of the position of the 2D imaging displayed by the display means.

See-through reality systems, such as optical-see-through or video-see-through, have ability to mix real world and virtual objects. Some real-world objects in the user's field of view have a display, such as monitors, televisions, tablets and smart phones or smart watches. See-through reality systems (AR glass) are not aware about screens in environment and behave them as normal objects. However, they are very good information displays for virtual objects. Thus, due to the present invention displayed 2D content can be linked to data representing 3D content and displayed together or without the 2D content. Therefore, very fast and flexible exchanging of 2D/3D data is possible.

Further preferred embodiments are subject-matter of the following specification parts and/or of the dependent claims.

According to a preferred embodiment of the present invention the step of registering comprises a step of detecting the display means within the field of view. Additionally, or alternatively a vision analysis of the field of view of the head mounted display is executed to manipulate the 2D imaging, in particular to transfer it into a 3D shape or to display by means of the head mounted display multiple, preferably animated, 3D objects, or to link the head mounted display to a data source providing data of the second type, wherein the data of the second type corresponds to the 2D imaging and/or 2D writing. This embodiment is beneficial since a display screen can be used as linking respectively selecting source for 3D objects based on 2D information. A human sees the screen within its field of view and automatically or on request or on command one or multiple 3D objects are based on the identification or linking data visually generated by the head mounted display.

Features of the displayed 2D imaging are according to a further preferred embodiment of the present invention evaluated during said vision analysis, wherein said features are representing the shape of fonts, text, symbol/s and/or image/s and/or photos. This embodiment is beneficial since the appearance of the shape of fonts, text, symbol/s and/or image/s and/or photos can be used as identification feature. Thus, independently of the presented content a registration respectively identification respectively matching can be detected. A camera means of the head mounted display captures the image or video sequence on the screen of the display device and a vision analysis compares the displayed content with content captured by the camera means. In case a match is determined a signal connection between the head-mounted display, a processor unit and the display means is set up.

The second type of data is according to a further preferred embodiment of the present invention transferred to the head mounted display in dependency of the vision analysis. Additionally, or alternatively a selection of data of the first type can be performed by triggering a selection function, in particularly by pushing one of a plurality of multiple virtual buttons displayed in the display means and/or by pressing a hardware button, in particular of a joystick or mouse.

The first type of data represents one or multiple markers providing according to a further preferred embodiment of the present invention identification and/or linking data for causing a combined data processing of data of the first type and data of the second type for generating the combined optical information comprising the 3D object and the 2D imaging. This embodiment is beneficial since the markers can be designed in very unique shapes.

According to a further embodiment of the present invention the marker or markers or one marker or some markers are displayed in less than 100% or in less than 99% or in less than 95% or in less than 90% or in less than 80% or in less than 70% or in less than 60% or in less than 50% or in less than 40% or in less than 30% or in less than 20% or in less than 10% of the displayed (on the display means) frames per minute. The camera means of the head mounted display is preferably synchronized with the displaying of marker/s. Thus, the overall time the markers are displayed is preferably very short in particularly below a threshold of perception of an average human being.

At least one marker is according to a further preferred embodiment of the present invention an active marker, wherein the identification and/or linking data represented by said active marker changes in dependency of the 2D imaging respectively writing. This embodiment is beneficial since the registration between display means, processor unit and head mounted display is preferably updated respectively modified in dependency of the content displayed with the screen of the display means.

The 3D object is according to another embodiment of the present invention manipulated by human interaction, in particular gestures or hardware interactions, wherein the data of the first type is modified in dependency of the executed manipulation of the 3D object. This embodiment is beneficial since the original data (first and/or second type of data) can be processed, thus besides sole demonstrations also modifications can be performed.

The data of the first type represents according to a further preferred embodiment of the present invention structural parameters of the 3D object, in particularly size, weight, components, surface properties, geometrical properties, etc. This very helpful in case of computer aided design (CAD) or also computer aided manufacturing (CAM).

The display output changes according to a further preferred embodiment of the present invention in case the registration as combined display unit is completed, wherein the size of displayed 2D imaging representing a 2D illustration of the object is reduced or removed and/or wherein the size of displayed 2D imaging representing script and/or icons is enlarged and/or repositioned. The 3D object or 3D objects are preferably positioned besides or above or below or in front of the screen of the display means. Thus, the field of view can be used in a more efficient manner, since both 3D and 2D content can be visualized side by side.

A processor unit determines according to a further embodiment of the present invention a modification of the data of the first type in case the data of the second type is modified as a result of a virtual interaction with the 3D object and/or the processor unit determines a modification of the data of the second type in case the data of the first type is modified as a result of a parameter modification. This is beneficial since modifications of the 3D object can be directly supervised by evaluating the modified parameter values, or vice versa.

The data of the second type comprises according to another embodiment of the present invention animated data or video data illustrating at least one predefined motion sequence of the 3D object/s. This embodiment is beneficial since object dependent features can be highlighted or demonstrated in a fast and effective manner.

The present invention further refers to a computer program product for executing a method according to any of the preceding claims.

Further benefits, goals and features of the present invention will be described by the following specification of the attached figures, in which exemplarily components of the invention are illustrated. Components of the methods according to the invention, which match at least essentially with respect to their function can be marked with the same reference sign, wherein such components do not have to be marked or described multiple times with respect to said figures. In the following the invention is just exemplarily described with respect to the attached figures.

### Brief Description of the Drawings

- Fig. 1: schematically shows a screen and a virtual object in front of a user, wherein the user sees both;
- Fig. 2: schematically shows a user from behind, wherein a screen is arranged in front of the user, in particularly in the field of view of the user;
- Fig. 3: schematically shows the user from behind and the features the user sees by means of the head mounted display;
- Fig. 4: schematically a screen, wherein markers are displayed on said screen, and
- Fig. 5: schematically indicates steps of the inventive method.

### Detailed Description of the Drawings

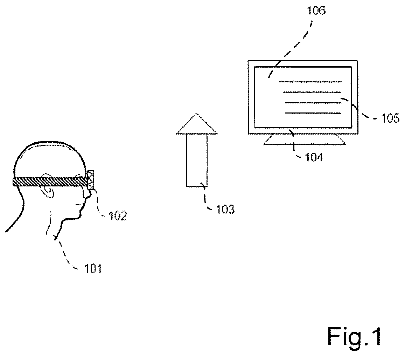

Fig. 1 shows a human 101 wearing a head mounted display 102. The head mounted display 102 has see through capabilities, that means the user does not only recognize content generated by the head mounted display, the user also sees real world content. Thus, the head mounted display can have one or multiple cameras capturing the surrounding of the user, in particular as extension of the natural human field of view. Additionally, or alternatively the head mounted display can have a see through window or glass that enables the users eye to detect content on the outer side of the window or glass.

Reference number 103 indicates a virtual object, in particular a 3D object. The virtual object can only be seen by means of a head mounted display or any other projection or image generation means that is able to generate virtual images, in particularly virtual 3D images.

Reference number 104 indicates a display means. The display means 104 is preferably a monitor in a real world environment. Thus, a further person without any additional optical assistance means only sees the display means 104 but not the virtual object 103.

Reference number 105 indicates 2D content, in particularly text or images.

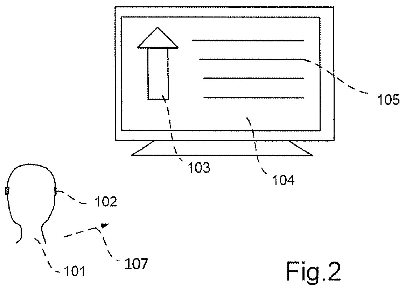

Fig. 2 shows an example according to which the 3D object is generated and arranged besides the 2D content 105. A further person might see a 2D image of the 3D object in that case, wherein the user 101 sees the 3D object 103. Thus, the head mounted display 102 overlays the 2D image of the 3D object 103 by the 3D object 103.

Thus, preferably a step of aligning the content displayed by monitor 104 and generating a virtual object 103 is executed and a further step of sending virtual object information and a side view of the virtual object 103 to the display means 104. This side view information and related information shown 2D but virtual object is generated in a volumetric 3D manner.

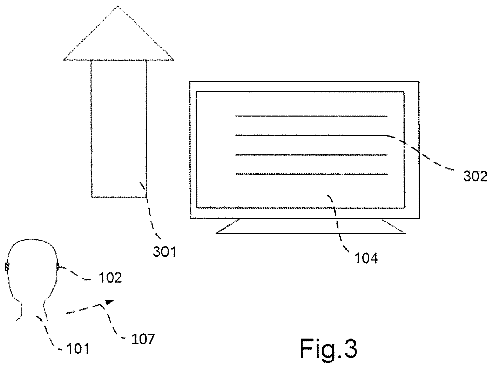

Fig. 3 shows an example according to which the virtual object 103 is positioned besides the display means 104. Thus, the virtual object 103 can be generated in a larger manner, even larger than the display means 104. Furthermore, the size and/or shape and/or position of the 2D content 105 can be changed in dependency of predefined settings or rules to generate re-arranged 2D content 302.

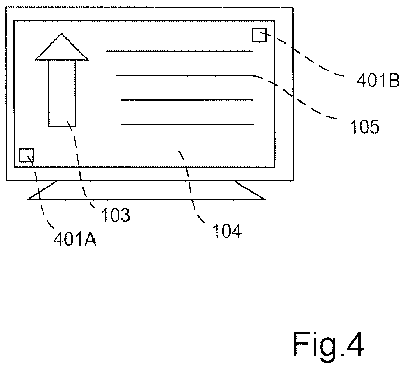

Fig. 4 shows markers 40aA and 401 B. Said markers 401A and 401 B can be understood as identification and/or linking means. So, one or multiple markers 401A and 401B are preferably not static, that means they are active so that the head mounted display detects respectively distinguishes whether a monitor or no monitor 104 is in the field of view.

Thus, the present invention refers to a method for outputting of combined 2D and 3D imaging. Said method preferably comprises the steps: Providing a display means 104 for at least outputting of data of a first type as 2D imaging, providing a head mounted display 102 with see through ability, aligning the head mounted display 102 to bring the display means 104 into the field of view of the head mounted display 102, registering the display means 104 and the head mounted display 102 as combined display unit, outputting by means of the head mounted display 102 data of a second type as optical information representing at least one 3D object 103, wherein the 3D object 103 is positioned within the field of view in dependency of the position of the 2D imaging displayed by the display means 104.

Therefore, 2D information is displayed in a monitor or by means of a monitor 104, which is in field of view of the HMD 102. Since the HMD 102 has optical see through capability, the monitor is within the field of view and creates 2D information on itself (that means on the screen of monitor). HMD 102 is preferably not creating any 2D information, 2D information are preferably only created by the monitor 104. The 3D object 103 and the 2D content are preferably aligned in such a manner that both is at least timewise in the field of view of the user 101.

In a most preferred case, an alignment pattern is possible to send to monitor to understand there is a monitor in the field of view of HMD 102. Here known prior art shows some techniques with static marking. However optical-see-through HMD 102 system preferably need to understand that marker pattern is not static.

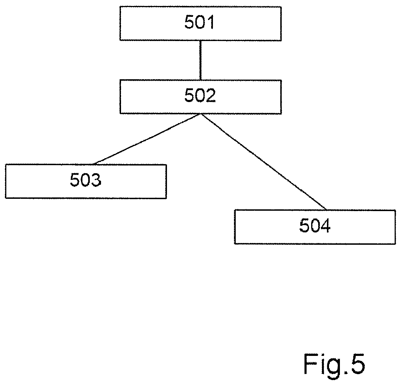

Fig. 5 shows an essential process of the present invention.

Because received content contains a video/image shown 3D (step 501), the HMD system needs to distinguish which content can be shown on monitor 104 in field of view (step 502). Here HMD (or any computing respectively processor unit) distinguishes differences between which data can be displayed respectively be shown in HMD 102, and which data can be shown or displayed by monitor 104. This done by another preferred feature: L-R eye differentiation is very low in 2D possible data if compared with 3D possible data, so a processor unit or the HMD 102 can divide 3D to HMD 102 (step 503) and 2D data to the monitor 104 (step 504) in the field of view.

Thus, the present invention refers to a method for outputting of combined 2D and 3D imaging. This method preferably comprises at least the steps of providing a display means 104 for at least outputting of data of a first type as 2D imaging, providing a head mounted display 102 including see through ability, aligning the head mounted display 102 to bring the display means 104 into the field of view of the head mounted display 102, registering the display means 104 and the head mounted display 102 as combined display unit, outputting by means of the head mounted display 102 data of a second type as optical information representing at least one 3D object 103, wherein the 3D object 103 is positioned within the field of view in dependency of the position of the 2D imaging displayed by the display means 104.

### List of reference numbers

- 101: User
- 102: Optical-see-through head mounted display (HMD)
- 103: Virtual object
- 104: Monitor in real environment
- 105: 2D information, generally text
- 106: 2D information is positioned according to virtual object
- 301: Larger virtual object
- 302: Content re-arranged for larger object
- 401A: Active marker
- 401 B: Active marker
- 501: Content received
- 502: Detect 2D and 3D content
- 503: 3D content send to HMD
- 504: 2D content send to monitor in appropriate format in the FOV of HMD

## Claims

1. Method for outputting of combined 2D and 3D imaging,
at least comprising the steps:
Providing a display means (104) for at least outputting of data of a first type as 2D imaging,
Providing a head mounted display (102) with see through ability,
Aligning the head mounted display (102) to bring the display means (104) into the field of view of the head mounted display (102),
Registering the display means (104) and the head mounted display (102) as combined display unit,
Outputting by means of the head mounted display (102) data of a second type as optical information representing at least one 3D object (103),
wherein the 3D object (103) is positioned within the field of view in dependency of the position of the 2D imaging displayed by the display means (104).

2. Method according to claim 1,
**characterized in that**
the step of registering comprises a step of detecting the display means (104) within the field of view,
wherein a vision analysis of the field of view of the head mounted display (102) is executed to manipulate the 2D imaging, in particular to transfer it into a 3D shape, or to link the head mounted display (102) to a data source providing data of the second type, wherein the data of the second type corresponds to the 2D imaging.

3. Method according to claim 2,
**characterized in that**
features of the displayed 2D imaging (106) are evaluated during said vision analysis, wherein said features are representing the shape of fonts, symbols and/or images.

4. Method according to claim 2 or 3,
**characterized in that**
the second type of data is transferred to the head mounted display (102) in dependency of the vision analysis.

5. Method according to claim 2 or 3 or 4,
**characterized in that**
the first type of data represents one or multiple markers providing identification and/or linking data for causing a combined data processing of data of the first type and data of the second type for generating the combined optical information comprising the 3D object and the 2D imaging.

6. Method according to claim 4 or 5,
**characterized in that**
at least one marker (401A, 401 B) is an active marker (401A, 401 B), wherein the identification and/or linking data represented by said active marker (401A, 401 B) changes in dependency of the 2D imaging.

7. Method according to any of the preceding claims,
**characterized in that**
the 3D object is manipulated by human interaction, in particular gestures, wherein the data of the first type is modified in dependency of the executed manipulation of the 3D object (103).

8. Method according to claim 7,
**characterized in that**
the data of the first type represents structural parameters of the 3D object, in particularly size, weight, components, surface properties and/or geometrical properties.

9. Method according to any of the preceding claims,
**characterized in that**
the display output changes in case the registration as combined display unit is completed, wherein the size of displayed 2D imaging representing a 2D illustration of the object is reduced or removed
and/or
wherein the size of displayed 2D imaging representing script and/or icons is enlarged and/or repositioned.

10. Method according to claims 7 to 9,
**characterized in that**
a processor unit determines a modification of the data of the first type in case the data of the second type is modified as a result of a virtual interaction with the 3D object (103)
and/or
the processor unit determines a modification of the data of the second type in case the data of the first type is modified as a result of a parameter modification.

11. Method according to any of the preceding claims,
**characterized in that**
the head mounted display (102) and the display means (104) are connected to the same processor unit.

12. Method according to any of the preceding claims,
**characterized in that**
the data of the second type comprises animated data or video data illustrating a at least one predefined motion sequence of the 3D object (103).

13. Computer program product for executing a method according to any of the preceding claims.
